Europäisches Patentamt

European Patent Office

Office européen des brevets

(11) Veröffentlichungsnummer: **0 132 533**
**B1**

(12) **EUROPÄISCHE PATENTSCHRIFT**

(45) Veröffentlichungstag der Patentschrift: **09.11.88**

(51) Int. Cl.⁴: **G 11 B 23/023**

(21) Anmeldenummer: **84105978.5**

(22) Anmeldetag: **25.05.84**

(54) Behälter für die Aufbewahrung von Magnetbandkassetten.

(30) Priorität: **22.07.83 DE 3326465**
**22.10.83 DE 3338518**

(43) Veröffentlichungstag der Anmeldung:
**13.02.85 Patentblatt 85/07**

(45) Bekanntmachung des Hinweises auf die
Patenterteilung:
**09.11.88 Patentblatt 88/45**

(84) Benannte Vertragsstaaten:
**AT BE CH FR GB IT LI NL SE**

(56) Entgegenhaltungen:
**EP-A-0 092 666**
**DE-A-3 204 998**
**US-A-4 225 201**
**US-A-4 231 625**

(73) Patentinhaber: **fischerwerke Artur Fischer
GmbH & Co. KG
Weinhalde 14-18
D-7244 Tumlingen/Waldachtal 3 (DE)**

(72) Erfinder: **Stromiedel, Konrad
Martinskirchle 22
D-7244 Waldachtal 3/Tumlingen (DE)**

EP 0 132 533 B1

Courier Press, Leamington Spa, England.

**Beschreibung**

Die Erfindung betrifft einen Behälter mit ein oder mehreren Einzelboxen, die aus einen rechteckigen Hohlkörper bildenden Wandteilen und einem eine in den Hohlkörper passende Frontseite aufweisenden, eine Magnetbandkassette haltenden Schieber bestehen.

Wird der Behälter bei ausreichender Beleuchtung verwendet, bestehen keine Schwierigkeiten, den zum Öffnen des Behälters für die Entnahme der Kassette zu betätigenden Schieber aufzufinden. Bei fehlender Ausleuchtung insbesndere im Kraftahrzeug bei Nachtfahrten sind Orientierungshilfen zweckmäßig.

Der Erfindung liegt daher die Aufgabe zugrunde, eine Orientierungshilfe zu schaffen, die auch bei fehlender Ausleuchtung das Auf finden und die Betätigung der Schieber zur Entnahme von Magnetbandkassetten ermöglicht.

Erfindungsgemäß wird dies dadurch erreicht, daß an der Rückseite des Behälters ein mit einer Lichtquelle ausgestatteter Reflektor angeordnet ist, und daß die Wandteile aus lichtleitendem Kunststoff hergestellt sind.

Mit. dem Reflektor und der eingebauten Lichtquelle wird die gesamte Rückseite des Behälters angestrahlt. Über die aus lichtleitendem Kunststoff bestehenden Wandteile ergibt sich ein der frontseitigen Kontur der Wandteile entsprechendes Lichtband, das die Einzelboxen umrahmt. Da die Frontseite des zum Öffnen der Box zu betätigenden Schiebers innerhalb des Lichtbandes liegt, stellt das Auffinden der einzelnen Boxen kein Problem mehr dar.

In einer weiteren Ausgestaltung der Erfindung kann der Reflektor die Rückseite des Behälters bilden. Mit dieser Gestaltung ist der Reflektor integrierter Bestandteil des Gehäuses des Behälters.

In einer weiteren Ergänzung der Erfindung kann der Reflektor ein aus hell, vorzugsweise weiß eingefärbtem Kunstostoff bestehendes Spritzteil sein. Die Reflexion eines hall bzw. weiß eingefärbten Kunststoffreflektors reicht aus, um auch bei relativ schwacher Stromquelle an der Frontseite des Gehäuses ein ausreichendes Lichtband zu erzeugen.

Schließlich kann in einer weiteren Ergänzung der Erfindung bei einem Einsatz des Behälters in Kraftfahrzeugen die Lichtquelle an den die Armaturenbeleuchtung eines Kraftfahrzeugs speisenden Strokreis angeschlossen sein.

Die Erfindung kann auch so gestaltet sein, daß eine außerhalb des Behälters angeordnete Lichtquelle aus gitterförmig angeordneten Lichtleitstäben vorgesehen ist.

Die von der außerhalb des Behälters angeordneten lichtquelle gespeisten Lichtleitstäbe bewirken eine auf die transparenten Wandteile konzentrierte und gleichmäßige Lichtverteilung. Die sich damit ergebende relativ flache Bauweise des Behälters erleichtert den Einbau insbesondere in Kraftfahrzeugen, wo sehr häufig nur begrenzte Einbautiefen zur Verfügung stehen.

In einer Ausgestaltung der Erfindung können die Lichteintrittsseiten der Lichtleitstäbe sternförmig um die lichtquelle gruppiert sein. Durch mehrere, separat von der lichtquelle abgehende Stränge der Lichtleitstäbe egeben sich geringere lichtverluste für die vom der lichtquelle entfernt liegenderen Wandteilen des Behälters, sodaß durch die intensivere Ausnutzung des durch die lichtquelle erzeugten Lichts ein gleichmäßiges Lichtband an der Frontseite des Behälters erzeugt wird.

In einer weiteren Gestaltung der Erfindung kann über die lichtquelle eine Kappe mit sternförmig angeordneten Öffnungen gestülpt sein, in die die Lichteintrittsseite der Lichtleitstäbe münden. Mit der über die lichtquelle gestülpten Kappe wird eine wietere Wirkungsgradverbesserung erreicht.

Schließlich kann nach einer weiteren Ergänzung der Erfindung die den Wandteilen zugekehrte Mantelfläche der Lichtleitstäbe durch eine Aufrauhung aktiviert sein. Damit wird der Lichtaustritt der Lichtleitstäbe auf die aus lichtleitendem Kunststoff bestehenden Wandteile noch stärker konzentriert.

Um die auftretenden Lichtverluste in den Lichtleitstäben in Abhängigkeit von der Entferung von der lichtquelle zu kompensieren, kann in weiterer Ausgestaltung der Erfindung die Aufrauhung der Lichtleitstäbe mit zunehmenden Abstand von der Lichtquelle in ihrer Rauhtiefe zunehmen. Durch Erhöhung der Rauhtiefe wird der Lichtaustritt verstärkt, sodaß unabhängig vom Abstand der Wandteile von der lichtquelle eine gleichmäßige Ausleuchtung stattfindet.

In der Zeichnung ist ein Ausführungsbeispiel der Erfindung dargestellt.

Es zeigen:

Figur 1 den Behälter in perspektivischer Darstellung mit aufgeschnittenem Reflektor

Figur 2 die Frontseite des Behälters

Figur 3 den Behälter mit seitlich angebrachtem Beleuchtungskörper

Figur 4 eine Teilansicht der Rückseite des Behälters nach Figur 3

Figur 5 eine Teilansicht der Frontseite des Behälters nach Figur 3.

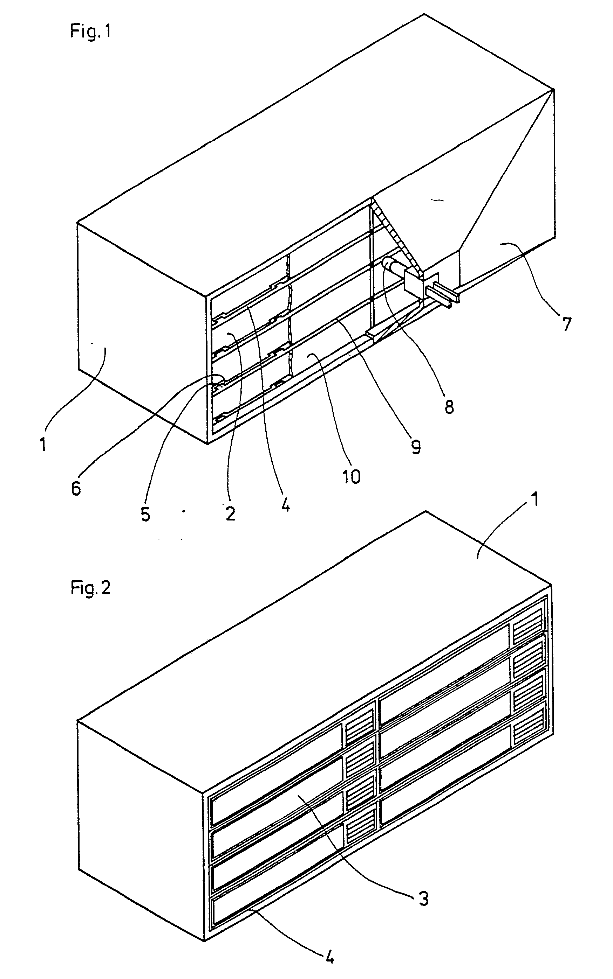

In das Behältergehäuse 1 nach Fig. 1 und 2 sind mehrere, jeweils zu zwei Blöcken zusammengefaßte Einzelboxen 2 eingeschoben. Jede einzelne Box weist einen nach vorn öffnenden Verschluß in Form einer am Schieber angeordneten Frontplatte 3 auf, bei dessen Betätigung die Kassette mittels des Schiebers aus der Box herausbefördert wird. Das Gehäuse der Einzelboxen 2 besteht aus einen rechteckigen Hohlkörper bildenden Wanteilen 4, wobei die Oberseite Verbindungsleisten 5 und die Unterseite mit diesen Leisten korrespondierende Verbindungsschlitze 6 aufweist.

Die Rückseite des Behältergehäuses 1 wird durch einen Reflektor 7 gebildet, der aus einem weiß eingefärbten Kunststoffteil besteht. Im Zentrum des Reflektors 7 ist eine Glühbirne 8 vorgesehen, die beispielsweise an den Stromkreis der Armaturenbeleuchtung eines Kraftfahrzeuges anschließar ist. Durch den Reflektor 7 wird die gesamte Rückseite des Behälters und damit die Wandteile 4 der einzelnen, aus einem lichtleitendem Kunststoff hergestellten Boxen bestrahlt. Ober die Wandteile 4 wird das Licht gebündelt and die Frontseite der Boxen geleitet, wo es als Lichtband die Umrisse der einzelnen boxen kenntlich macht. Durch die ineinandergreifenden Verbindungsleisten 5 und -schlitze 6 der Einzelboxen 2 würden die Optik beinträchtigende Helligkeitsunterschiede entstehen. Um dies zu vermeiden ist auf die Rückseite der Boxen ein mit schlitzartigen Öffnungen versehenes Gitter 10 derart aufgelegt, daß die mit den Verbindungsmitteln versehenen Wandteile der Boxen abgedeckt sind. Die Öffnungen 9 des Gitters 10 ermöglichen somit einen Lichteinfall auf die Bereiche der Wandungsteile 4, die keine Unterbrechungen aufweiswen. Damit erscheint auf der Frontseite ein gleichmäßiges, die Umrisse der Boxen abzeichnendes Lichtband.

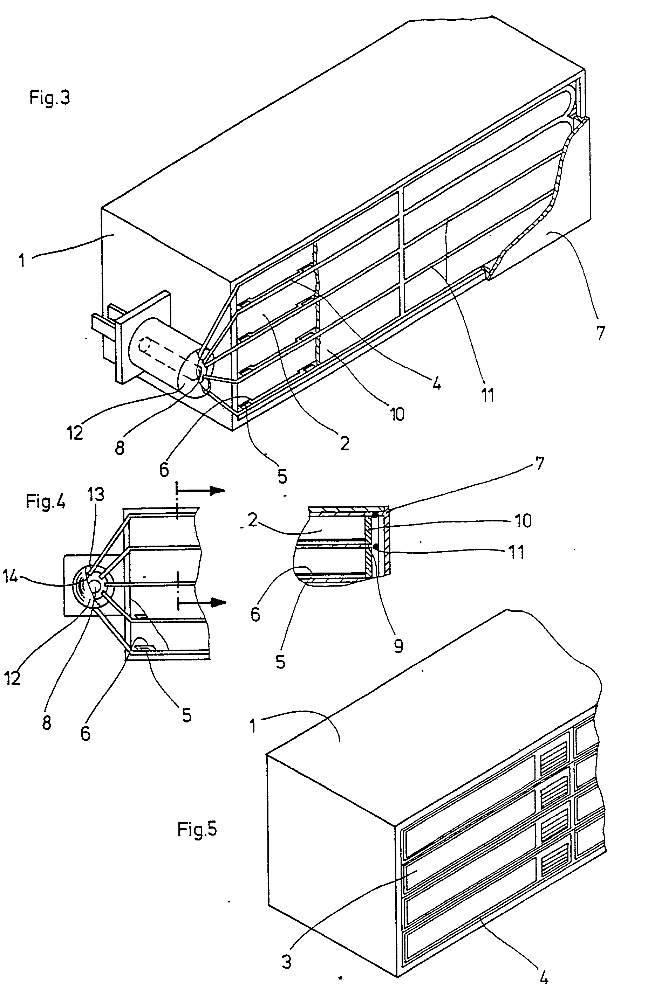

Bei dem Ausführungsbeispiel nach den Figuren 3,4 und 5 ist die Lichtquelle, nachfolgend Beleuchtungskörper 8 genannt seitlich am Behälter vorgesehen. Von diesem Beleuchtungskörper 8 gehen sternförmig mehrere Stränge von Lichtleitstäben 11 ab, die gitterförmig entlang den aus lichtleitendem Kunststoff bestehenden Wandteilen 4 verlaufen. Die Lichtleitstäbe 11 sind durch eine den Wandteilen zugekehrte Aufrauhung ihrer Mantelfläche aktiviert, sodaß über die Wandteile 4 das Licht gebündelt an die Frontseite der Boxen geleitet wird, wo es als Lichtband die Umrisse der einzelnen boxen kenntlich macht. Durch die ineinandergreifenden Verbindungsleisten 5 und -schlitze 6 der Einzelboxen 2 würden die Optik beeinträchtigende Helligkeitsunterschiede entstehen. Um dies zu vermeiden, ist auf die Rückseite der box ein mit schlitzartigen Öffnungen 9 versehenes Gitter 10 derart aufgelegt, daß die mit den Versehenen Wandteile 4 der Boxen abgedeckt sind. Die Öffnungen 9 des Gitters 10 ermöglichen somit einen Lichteinfall auf die Bereich der Wandungsteile 4, die keine Unterbrechungen auf weisen. Damit erscheint auf der Frontseite ein gleichmäßiges, die Umrisse der Boxen abzeichnendes Lichtband.

Um bezüglich der Ausnutzung des vorhandenen Lichts einen noch besseren Wirkungsgrad zu erreichen, ist auf den Beleuchtungskörper eine Kappe 12 mit sternförmig angeordneten Öffnungen 13 gestülpt, in die die Leichteintrittseite 14 der Lichtleitstäbe 11 münden. Begünstigt wird die gleichmäßige Verteilung des lichts durch eine Aufrauhung der den Wandteilen zugekehrten Mantelffäche der Lichtleitstäbe 11, wobei die Rautiefe der Aufrauhung mit zunehmenden Abstand von Beleuchtungskörper 8 ebenfalls zunimmt.

## Patentansprüche

1. Behälter mit ein oder mehreren Einzelboxen, die aus einen rechteckigen Hohlkörper bildenden Wandteilen und einem eine in den Hohlkörper passende Frontseite aufweisenden, eine Magnetbandkassette haltenden Schieber bestehen, dadurch gekennzeichnet, daß an der Rückseite des Behälters ein mit einer Lichtquelle ausgestatteter Reflektor angeordnet ist, und daß die Wandteile aus lichtleitendem Kunststoff hergestellt sind.

2. Behälter nach Anspruch 1, dadurch gekennzeichnet, daß der Reflektor die Rückseite des Behälters bildet.

3. Behälter nach Anspruch 1, dadurch gekennzeichnet, daß der Reflektor ein aus hell, vorzugsweise weiß eingefärbtem Kunststoff bestehendes Spritzteil ist.

4. Behälter für den Einsatz in Kraftfahrzeugen, nach Anspruch 1, dadurch gekennzeichnet, daß die Lichtquelle an den die Armaturenbeleuchtung eines Kraftfahrzeugs speisenden Stromkreis angeschlossen ist.

5. Behälter mit ein oder mehreren Einzelboxen, die aus einem rechteckigen Hohlkörper bildenden Wandteilen und einem eine in den Hohlkörper passende Frontseite aufweisenden, eine Magnetbandkassette haltenden Schieber bestehen, dadurch gekennzeichnet, daß eine außerhalb des Behälters angeordneten Lichtquelle aus gitterförmig angeordneten Lichtleitstäben vorgeschen ist, die entlang den aus lichtleitendem Kunststoff bestehenden Wandteilen verlaufen.

6. Behälter nach Anspruch 5, dadurch gekennzeichnet, daß die Lichteintrittseite der Lichtleitstäbe sternförmig um die Lichtquelle gruppiert sind.

7. Behälter nach Anspruch 6, dadurch gekennzeichnet, daß über die Lichtquelle eine Kappe mit sternförmig angeordneten Öffnungen gestülpt ist, in die die Lichteintrittseite der Lichtleitstäbe münden.

8. Behälter nach Anspruch 5, dadurch gekennzeichnet, daß die den Wandteilen zugekehrte Mantelfläche der Lichtleitstäbe durch Aufrauhung aktiviert ist.

9. Behälter nach Anspruch 8, dadurch gekennzeichnet, daß die Aufrauhung der Lichtleitstäbe mit zunehmenden Abstand von der Lichtquelle in Ihrer Rauhtiefe zunimmt.

## Revendications

1. Boîtier comportant un ou plusieurs étuis, logements ou caissons individuels, consistant en un corps creux rectangulaire formant des éléments de cloison et en un tiroir, qui présente un côté avant s'adaptant dans le corps creux et qui contient une cassette de bande magnétique, boîtier caractérisé en ce qu'un réflecteur équipé d'un source lumineuse est monté sur le côté arrière du boîtier, et en ce que les éléments de paroisont réalisés en une matière plastique conductrice de la lumiere.

2. Boîtier selon la revendication 1, caractérisé en ce que le réflecteur forme le côté arrière de ce boîtier.

3. Boîtier selon la revendication 1, caractérisé en ce que le réflecteur est un élément moulé par injection, consistant en une matière plastique claire, de préférence colorée en blanc dans sa masse.

4. Boîtier destiné à servir dans des véhicules autombiles, selon la revendication 1, caractérisé en ce que la source lumineuse est raccordée au circuit électrique alimentant l'éclairage du tableau de bord d'un véhicule automobile.

5. Boîtier comportant un ou plusieurs logements ou caissons individuels, consistant en un corps creux rectangulaire formant des éléments de cloison et en un tiroir, qui présente en côté avant s'adaptant dans le corps creux et qui contient une cassette de bande magnétique, boîtier caractérisé en ce qu'une source lumineuse, disposée à l'extérieur du bofitier, est conçue comme formée de fibres optiques ou de rubans conducteurs de la lumière, disposée en forme de réseaux placés le long des éléments de cloison consistant en une matière plastique conductrice de la lumière.

6. Boîtier selon la revendication 5, caractérisé en ce que les côtés d'entrée de la lumière dans les fibres optiques ou dans les rubans conducteurs de la lumière sont groupés en étoile autour de la source lumineuse.

7. Boîtier selon la revendication 6, caractérisé en ce que, au-dessus de la source lumineuse est placée une coiffe comportant des ouvertures disposées en étoile et dans lesquelles débouchent les côtés d'entrée de la lumière dans les fibres optiques ou les rubans conducteurs de la lumière.

8. Boîtier selon la revendication 5, caractérisé en ce que la surface d'enveloppe ou de gainage, du côté des éléments de cloison, des fibres optiques ou des robans conducteurs de la lumière, est activée par la création d'une rugosité sur cette surface.

9. Boîtier selon la revendication 8, caractérisé en ce que la profondeur des creux de la rugosité des rubans conducteurs de lumière ou des fibres optiques augmente avec l'augmentation de la distance par rapport à la source lumineuse.

**Claims**

1. Container having one or more individual boxes which comprise wall parts forming a rectangular hollow body and a slider member which has a front face fitting into the hollow body and which holds a magnetic tape cassette, characterised in that there is arranged at the rear face of the container a reflector provided with a source of light, and the wall parts are manufactured from a light-transmitting plastics material.

2. Container according to claim 1, characterised in that the reflector forms the rear face of the container.

3. Container according to claim 1, characterised in that the reflector is an injection-moulded part made of plastics material that is light, preferably white, in colour.

4. Container for use in vehicles, according to claim 1, characterised in that the source of light is connected to the electric circuit supplying the instrument-panel lighting of a vehicle.

5. Container having one or more individual boxes which comprise wall parts forming a rectangular hollow body and a slider member which has a front face fitting into the hollow body and which holds a magnetic tape cassette, characterised in that there is provided a source of light that is arranged outside the container and is composed of light-transmitting rods which are arranged in the form of a grid and run along the wall parts made of light-transmitting plastics material.

6. Container according to claim 5, characterised in that the light-inlet faces of the light-transmitting rods are grouped in the form of a star around the light source.

7. Container according to claim 6, characterised in that there is pushed over the light source a cap having openings arranged in the form of a star into which the light-inlet faces of the light-transmitting rods lead.

8. Container according to claim 5, characterised in that the surface of the light-transmitting rods that faces the wall parts is activated by roughening.

9. Container according to claim 8, characterised in that the depth of roughening of the light-transmitting rods increases as the distance from the light source increases.

Fig.1

Fig.2

Fig.3

Fig.4

Fig.5